# EUROPEAN PATENT APPLICATION

(11) **EP 4 667 889 A1**
(43) Date of publication of application: **24.12.2025**
(21) Application number: 24182625.4
(22) Date of filing: 17.06.2024
(51) Int. Cl.: G01M 5/00

(54) **A METHOD FOR MONITORING INSTALLATIONS COMPRISING JOINTS**

(71) Applicant: Growermetal S.p.A., 23885 Calco (LC) (IT); Politecnico di Milano, 23900 Lecco (IT)
(72) Inventor: CATTANEO, Paolo, 23885 Calco (LC) (IT); MANZONI, Stefano, 23807 Merate (IT); TARABINI, Marco, 23826 Mandello del Lario (IT); DEL CHICCA, Sara, 55049 Viareggio (IT); GALLETTA, Davide, 20154 Milano (IT)
(74) Representative: Kador & Partner Part mbB

(57) **Abstract**

The present invention relates to a method for monitoring an installation comprising joints wherein one or more of the joints comprise a washer and/or a nut and/or a bolt containing a sensor element, the method comprising the steps of:
(I) sending an electrical signal defined on a selected frequency range to the sensor element,
(II) receiving the electrical response signal from the sensor element and processing the signal to obtain the impedance signature of the coupled system,
(III) feeding the impedance signature signal and/or some or all of its features to an unsupervised machine learning algorithm and processing of the fed data by the unsupervised machine learning algorithm,
(IV) detecting and reporting anomalous conditions of the monitored installation,
and to a system implementing said method.

## Description

The present invention relates to a method for monitoring an installation comprising joints, wherein one or more of the joints comprise a washer and/or a nut and/or a bolt containing a sensor element, which method uses an unsupervised machine learning algorithm for anomaly detection.

For the safe operation of constructions comprising such installations and to guarantee their correct function, it is important to continuously and accurately surveille the preload set on (bolted) joints fixing different elements within the construction, especially when joints are subjected to high vibration levels in critical installation point, which may cause joint loosening or other failures.

There are several systems known in the prior art to surveil such installations or bolted joints in particular using different kinds of sensors. For example, KR 10-2018-0023618A discloses a method for detecting loosening of a bolt and a nut by a pressure sensor transforming pressure into electrical capacitance placed in between. Thereby, the sensor comprises an elastic polymer, which is compressed under pressure, stacked between a first electrode plate mounted on a lower part and a second electrode on an upper part. Applying an AC signal to the electrodes allows determining the coupling and loosening state between the bolt and the nut by measuring the generated capacitance, which depends on the distance between the electrode plates.

US 2017/0175792 A1 discloses a pre-load monitor between a washer face of a fastener and a bearing surface, e.g. in the form of a washer, comprising a piezoelectric generator. The piezoelectric generator generates the electrical power to measure, monitor and report the preload, wherein the electrical power is proportional to the preload. It also discloses the possibility that a small stimulating signal can be used to measure a response of the piezoelectric generator, which can be detected by load sensing hardware within the washer, for monitoring for changes in the preload condition.

US 2019/0316978 discloses a system and method for monitoring fastener tension, wherein a load monitoring sensor, e.g. a piezoelectric sensor, is interposed between a first and a second member clamped by the fastener and outputs an electrical signal upon changes in fastener tension. A processor transforms collected electrical data into mechanical data and compares those data to a predetermined mechanical limit value and generates an indication if a value is equal to or below the limit.

Linsheng Huo et al (Smart Materials and Structures, 26:057004, 2014*)* discloses an electro-mechanical impedance method to investigate the pre-load condition on a bolted connection using a "smart washer", wherein the smart washer comprises a piezoceramic transducer embedded between two flat metal rings.

A major problem faced in structural health monitoring of installations with sensors is to analyze and interpret the obtained data in an accurate, continuous, and, especially, cost- and work-efficient manner. Current state of the art methods such as described above require complex calibration and/or classification steps which are hence expensive and not work-efficient.

The object of the present invention is thus to provide a method for monitoring of installations comprising joints in which washers, bolts and/or nuts are used, usually bolted joints, that avoids the above-mentioned disadvantages and allows especially to cost- and work-efficiently monitor such installations.

The present invention is based on the finding that the above objects can be achieved by a method in which a signal such as an oscillating electrical signal is transmitted to a sensor element embedded in a washer, a bolt and/or a nut, preferably embedded in a washer, which is part of a (bolted) joint of the installation to be monitored, and using an unsupervised machine learning algorithm (autoencoder, isolation forest, ensemble learning) for anomaly detection to detect anomalies in the response signal obtained from the sensor acting as transducer.

Accordingly, the present invention provides a method for monitoring an installation comprising joints, usually bolted joints, wherein one or more of the joints comprise a washer, and/or a bolt and/or a nut, preferably a washer, containing a sensor element, the method comprising the steps of:
(I) sending an electrical signal defined on a selected frequency range to the sensor element,
(II) receiving the electrical response signal from the sensor element and processing the signal to obtain the impedance signature of the coupled system,
(III) feeding the impedance signature signal and/or some or all of its features to an unsupervised machine learning algorithm and processing of the fed data by the unsupervised machine learning algorithm,
(IV) detecting and reporting anomalous conditions of the monitored installation.

This method allows remote monitoring of an installation comprising joints in which washers, and/or nuts and/or bolts are used, usually joints which comprise bolts such as bolted joints, with high sensitivity and accuracy in real time. Due to the remote nature of said method installations can be continuously monitored, while hands-on time and standstill time of respective constructions for maintenance works are reduced to a minimum.

Furthermore, not all (bolted) joints within an installation fixing the same elements necessarily need to be provided with a sensor element, as the method allows also for determination of loosening of neighboring joints.

Hence, time-consuming, expensive, and difficult to achieve steps to qualify the system once installed, such as calibration of individual sensor elements or acquisition of many signals for various torque conditions and environmental conditions, are not necessary for this method.

In the method of the invention, a washer and/or a nut and/or a bolt contains a sensor element and is present in/at a joint of an installation, e.g. is present between two joining surfaces and/or is present as part of a joint comprising a bolt of an installation, to spread the pressure or act as a spacer or seal.

The washer(s) used in the method of the invention can have any shape of washers known in the art, e.g. can be a flat or a conical washer.

Also the nut and/or bolt used in the method of the invention can have any shape of nuts and/or bolts, respectively, known in the art.

Usually, one or more of the joints of an installation comprise a bolt. The bolt of a joint may be threaded or non-threaded. If the joint comprises a threaded bolt, it is usually designated as "bolted joint".

Usually, the threaded bolt of a bolted joint can be engaged by a nut to fasten the joint. A washer may be present between the bolt head and/or between a nut engaging the bolt, and a surface to be fastened.

In the method of the present invention, either one of a washer, a nut and a bolt of one or more joints of the installation to be monitored can contain a sensor element. It is preferred that one or more of the joints of the installation comprise a washer containing a sensor element.

The working principle of the sensor element in the washer, nut and/or bolt is known as electro-mechanical impedance (EMI) method. Accordingly, the applied electrical signal in step (I), which is also denoted as "electrical interrogation signal" herein, is transduced to a response signal (impulse response and/or transfer function) in step (II), whereby the sensor element itself acts as a transducer.

In particular, the input electrical interrogation signal is transformed into vibrations in the sensor element which in turn triggers a response signal. Structural changes in the surroundings of the sensor element, e.g. the torque set on the joint comprising the sensor element containing washer, nut and/or bolt affect the signal transducing step. Hence the response signal that is obtained from the sensor element depends on the health condition of the installation. It is important to note that the load on a joint comprising a sensor element may also be affected by the health status of neighboring joints.

The electrical signal in step (I) of the inventive method, also denoted as electrical interrogation signal, can be a voltage or a current signal.

In the method of the invention, the electrical (interrogation) signal can be sent to the sensor element continuously or intermittently.

The electrical interrogation signal sent to the sensor element may cover a preselected range of frequencies.

The electrical interrogation signal is defined on a selected frequency range to the sensor element and is usually an electrical oscillating signal.

Preferably, said electrical interrogation, usually oscillating, signal covers whole or part of a frequency range of 10 kHz to 10 MHz, preferably of 20 kHz to 1 MHz, more preferably of 30 kHz to 500 kHz, and most preferably from 50 kHz to 300 kHz.

The electrical response signal that is obtained across the frequency range of the applied electrical interrogation signal by transducing said signal by the sensor element as described above is usually further processed by using an impedance analyzer usually connected to the sensor element by electric cables, so as to obtain the impedance signature of the coupled system. Hence, the response signal obtained across the frequency range covered by the (oscillating) electrical interrogation signal is processed into the electro-mechanical impedance signature of the sensor element.

It is clear from experimental data that the electromechanical impedance signature across the frequency range of the interrogation signal correlates with the preload set on the joint, e.g. the torque set on the bolt of a joint.

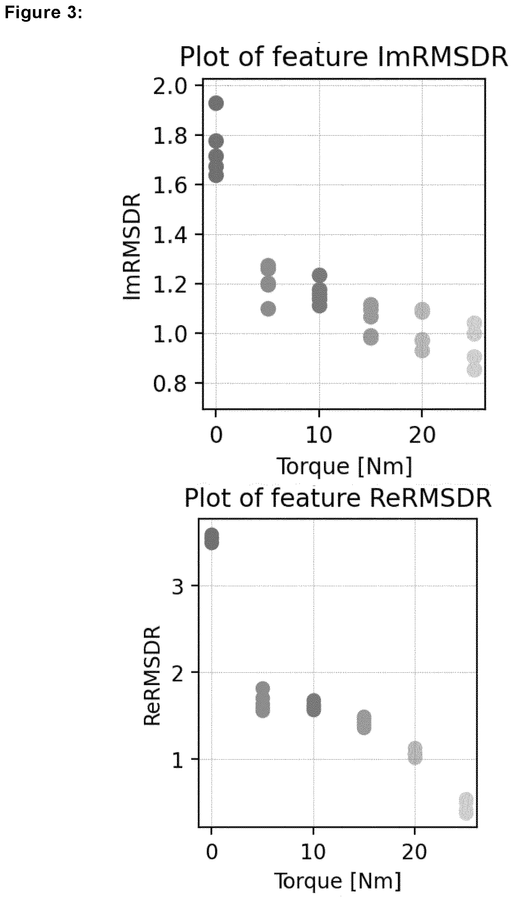

In particular, different features describing impedance signatures computed on predefined frequency subranges were shown to be highly correlated with preload set on the joints and thus indicated that the electromechanical impedance signature is capable of capturing information related to the healthy status of the joint at which or close to which the washer, nut and/or bolt containing the sensor element is present in the installation. Two examples, i.e. imaginary and real part of the root mean square deviation of the signature at different torque conditions to a reference signature at 25 Nm are shown in Fig. 3.

The impedance signature signal and/or some or all of its features, which may or may not be further transformed, are then fed to the unsupervised machine learning algorithm for anomaly detection. Examples for such unsupervised machine learning algorithms are an autoencoder, an isolation forest, or an ensemble learning, preferably, the unsupervised machine learning algorithm is an autoencoder.

"Unsupervised learning" is understood to mean that the machine learning algorithm used is able to group the data into a set of classes, such that the members of a given class are similar to each other and distinct from the members of all the other classes.

An autoencoder is a type of artificial neural network which is used to perform said function, i.e. unsupervised learning, in this particular case the classes grouping is performed by efficient codings of unlabelled data.

An autoencoder, furthermore, is based on two operations: an encoding operation that transforms the input data, and a decoding operation that recreates the input data from the encoded representation. This unsupervised machine leaning algorithm is able to learn how to encode and subsequently decode signal losing as little information as possible. Different variants of autoencoders exist such as regularized autoencoders and variational autoencoders which are effective for classification tasks and for applications as generative models, respectively.

Accordingly, usually and preferably, in the method of invention the data fed to the unsupervised machine learning algorithm, preferably autoencoder, i.e. the impedance signature signal and/or some or all of its features, are processed therein. Preferably, processing is done by encoding and subsequently decoding of the fed data.

The algorithm of the autoencoder, as the preferred example of the unsupervised machine leaning algorithm used in the present invention, has hence the capability to encode and subsequently decode an input signal through a network architecture with a shape similar to that of an hourglass and can be trained in processing data of a certain nature. Accordingly, the reconstructed, i.e. encoded and subsequently decoded data, will always be affected by an error which is referred to as reconstruction error and which can be minimized for a certain type of data by training the autoencoder neural network on processing such data.

In this regard training means to search for the optimal internal parameters of the neural network which can be accomplished by mathematical optimization techniques. Training is thus finding weights and biases of each single neuron of the network itself. At the end of the training phase the biases and weights are the ones that should guarantee a minimum of the loss function.

In a preferred embodiment of the inventive method the autoencoder, as the preferred example of the unsupervised machine leaning algorithm used in the present invention, has been trained to decode encoded response signals obtained from the sensor element in the washer of the installation to be monitored in conditions of the installation defined as healthy.

The unsupervised machine leaning algorithm, preferably autoencoder, must be proficient in processing response signals of all different conditions considered as healthy conditions, for example the autoencoder, as preferred embodiment of the unsupervised machine leaning algorithm, upon encoding and decoding the response signal of healthy condition(s) must be able to do this with only a small or minimized reconstruction error of the decoded signal.

Healthy conditions are defined as conditions, wherein all (bolted) joints of the installation to be monitored, i.e. the (bolted) joints containing washers, nuts and/or bolts comprising a sensor element and other (bolted) joints which do not contain washers, nuts and/or bolts comprising sensor elements themselves but are in the vicinity of at least one (bolted) joint with a washer, nuts and/or bolts comprising a sensor element, have a pre-determined preload/torque set on them or have a preload/torque set on them being in a pre-determined range.

Thereby, multiple different conditions of the installation may be considered as healthy conditions. If this is the case, it is important that the unsupervised machine leaning algorithm, preferably autoencoder, is proficient in processing response signals of all different conditions considered as healthy conditions, for example the autoencoder, as preferred embodiment of the unsupervised machine leaning algorithm, upon encoding and decoding the response signal of all different healthy conditions must be able to do this with only a small reconstruction error of the decoded signal.

Therefore, in a further preferred embodiment of the method the training process of the unsupervised machine leaning algorithm, preferably autoencoder, comprises training at multiple different conditions of the installation defined as healthy.

It is important to note that the transduction of the signal by the sensor element depends also on external factors the installation comprising the sensor element is exposed to. Hence, reliable surveillance of the health status of the installation using the inventive method might require that these external factors are considered. Therefore, it is preferred that the training process of the unsupervised machine leaning algorithm, preferably autoencoder, comprises training at multiple conditions of the installation defined as healthy under multiple different environmental, preferably different temperature, conditions.

Preferably, the training process of the unsupervised machine leaning algorithm, preferably autoencoder, comprises training in the same, a similar or wider temperature range than the operational temperature range of the installation to be monitored.

Preferably, the training procedure can be performed in a temperature range with a lower limit of -10 °C, or with a lower limit of 0°C, or with a lower limit of 10°C.

Furthermore, the training procedure can be performed in a temperature range with an upper limit of 75 °C, or with an upper limit of 60°C, or with an upper limit of 50°C.

For example, the training procedure, e.g. for monitoring a common civil structure, can be performed in a temperature range of from -10°C to 50°C.

The training procedure can be performed also at ranges of other environmental conditions, such as different humidity conditions.

In step (IV) of the inventive method anomalous conditions of the monitored installation are reported. This is possible by e.g. comparing the output data of the unsupervised machine leaning algorithm, preferably autoencoder, (processed signal) with the original data.

This means, for example for the autoencoder, as preferred embodiment of the unsupervised machine leaning algorithm, that the impedance signature signal and/or some or all of its features ("data"), which have been fed to it are processed, i.e. decoded and encoded by the autoencoder, and the obtained data are compared with the corresponding input data.

Due to the training of the autoencoder neural network as preferred embodiment of the unsupervised machine leaning algorithm, through processing a distinct set of data only, e.g. those defined as having been received from the installation in "healthy conditions", data from other, e.g. non-healthy conditions, will be reconstructed only with a comparatively higher reconstruction error. In other words, reconstruction errors are minimized for data derived from a condition the autoencoder neural network, has been trained on but not for other types of data, so that the quantified reconstruction error can be used to distinguish between "healthy" and "non-healthy" (anomalous) conditions of the installation the data are received from.

Accordingly, for preferred embodiments of the method wherein the unsupervised machine leaning algorithm, preferably autoencoder neural network, has been trained to decode/encode impedance signature signal and/or some or all of its features obtained from the sensor element in the washer of the installation to be monitored in conditions of the installation defined as healthy, the decoded, i.e. reconstructed, data of other, non-healthy (anomalous) conditions are affected by a bigger error when compared to the input data than reconstructed data of data derived from healthy conditions. The decision whether received data response signal reflects an anomalous condition being reported can therefore be made on the basis of a threshold of the reconstruction error. The reconstruction error may, for example, be defined to be the mean square error of the difference (sample by sample) between the original and the reconstructed signal.

In regard of all embodiments of the inventive method it is further preferred that detecting and reporting anomalous conditions of the monitored installation in step (IV) comprises comparing the reconstruction error of the encoded/decoded data with a predetermined or adaptive threshold value. Preferably, the predetermined threshold is computed by the use of validation data.

The threshold value can, for example, be defined to be an agreement of the encoded/decoded data with the validation data of at least 80%, or at least 85%, or at least 90% or at least 95%.

Where a reconstruction error which is above said predetermined threshold is detected, an anomalous condition for the installation is reported.

Where more than one washer, nut and/or bolt, preferably washer, with a sensor element as described herein are used in an installation, it is usually also reported which washer, nut, and/or bolt and/or which part of the installation is concerned by the anomalous condition.

The sensor element used in the washer, nut and/or bolt may comprise a piezoelectric, and/or magneto strictive material and/or a electro-magnetic device, preferably comprises, or consists of, a piezoelectric material, more preferably comprises, or consists of, a piezoceramic material.

It is preferred that the sensor element is housed in a slot within the washer, the nut and/or the bolt.

Furthermore, the sensor element is preferably fully embedded in the washer, the nut and/or the bolt structure, i.e. does not extend over the outer shape of the washer, the nut and/or the bolt structure, respectively.

It is furthermore preferred that after installation of the sensor element in the washer, the nut and/or the bolt, the outer shape of the washer, the nut and/or the bolt, respectively, is restored, so that the outer shape corresponds to the same washer, the nut and/or the bolt, respectively, without sensor element, e.g. by filling any remaining open parts of a slot within which the sensor element has been inserted.

Generally, the sensor used in the inventive method may have the form of a disk.

If, as is preferred, a washer with a sensor element is used in the present invention, it is preferred that the sensor element is embedded in the washer so that its plane, e.g. the plane of a disk-shaped sensor element, is parallel to the washer surface plane.

Further preferred, the extension of the sensor element in width direction of the washer is from 60 to 90 % of the washer width, preferably is from 80 to 90 % of the washer width.

If a bolt with a sensor element is used in the present invention, it is preferred that the sensor element is embedded in the bolt head. Furthermore, it is preferred that the sensor element is embedded in the bolt head so that its plane, e.g. the plane of a disk-shaped sensor element, is parallel to the surface of the bolt head. Still further, it is preferred that the sensor element is embedded in the bolt underhead.

If a nut with a sensor element is used in the present invention, it is preferred that the sensor element is embedded in the nut so that its plane, e.g. the plane of a disk-shaped sensor element, is parallel to the nut surface plane. Still further, it is preferred that the sensor element is embedded in the nut on the side of the nut which in installation is adjacent to a workpiece to be joined.

One advantage of the sensor design is that it can be applied to bolts of all commonly used sizes such as M8. Furthermore, the washer, the nut and/or the bolt comprising the sensor element can simultaneously fulfil both the traditional functions of a washer, nut and/or bolt, respectively, and monitoring functions.

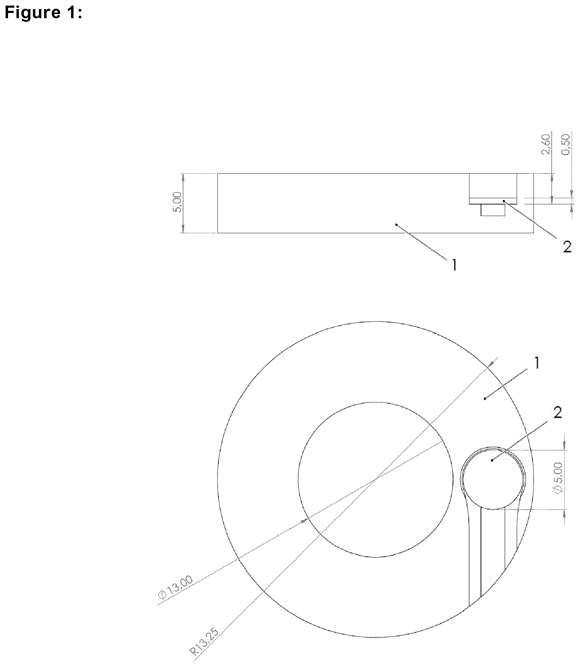

Washers containing a sensor element as disclosed herein are also denoted as "sensorized washers". Similarly, nuts or bolts containing a sensor element as disclosed herein are also denoted as "sensorized nuts" or "sensorized bolts", respectively. Fig 1 shows an exemplary picture of a sensorized washer.

As mentioned before, it is not necessary to provide all (bolted) joints within an installation to be monitored with washers, nuts and/or bolts comprising a sensor element, as anomalies may also be detected in (bolted) joints in the surrounding of a joint comprising a sensorized washer sensorized nut and/or sensorized bolt, e.g. such joints fixing the same elements.

Therefore, for example, in an installation to be monitored, a sensorized washer, nut and/or bolt may be used at every joint, every second joint, every third joint or in even lower frequency.

Providing more joints with washers, nuts and/or bolts comprising sensor elements may enhance safety of the system but also increases costs and complexity of the whole monitoring system.

The present invention further concerns a system for monitoring an installation comprising joints, wherein one or more of the joints comprise a washer, nut and/or bolt, preferably a washer, containing a sensor element, implementing the method in any one of the embodiments described herein.

The present invention is further illustrated by way of examples, with reference to the figures, which show:
Fig. 1: Side view and top view of a washer 1 comprising a sensor element 2 to be used in the method of the present invention showing the dimensions of washer, slot and sensor element.
Fig. 2: Washer 1 of Fig.1 in perspective view.
Fig. 3: RMSD (Root mean square deviation) imaginary part and real part of the impedance signature to a reference signature at 25 Nm nominal tightening condition depending on the torque set on the bolt.
Fig. 4: Confusion matrix with counts of correctly and incorrectly predicted situations of healthy and anomalous conditions by the autoencoder trained on multiple temperatures.
Fig. 5: Histogram showing the distribution of reconstruction errors computed based on response signals derived from the autoencoder trained on multiple tem peratures.
Fig. 6.: Perspective view of the washer 1 shown in Fig. 2 with fully embedded sensor element 2 and electrical cable 3.
Fig. 7: Washer of Fig. 6 installed in an exemplary installation comprising one bolted joint 4 on a metal plate 5.
Fig. 8: Washer of Fig. 6 installed in an exemplary installation comprising several bolted joints 4 on a metal plate 5.

### Examples

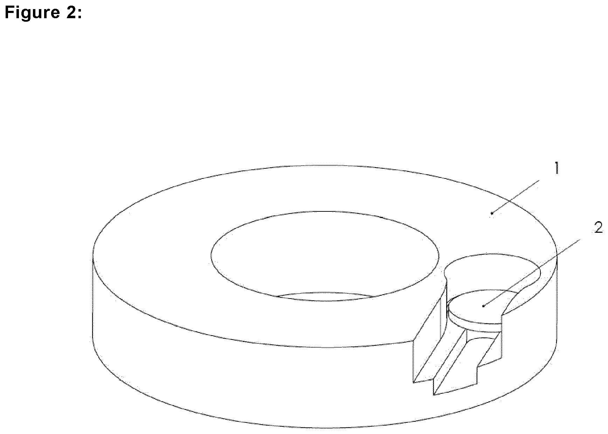

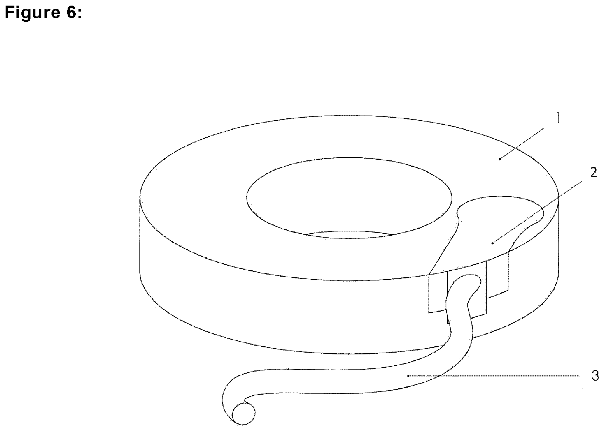

In the following examples, a washer 1 comprising a disc-shaped piezoceramic sensor element 2 was used as shown in Fig. 1, 2 and 6. In washer 1 a sensor element 2 is embedded in a slot of the washer. In the final washer 1, the sensor element is connected to the outside by cable 3 and the remaining slot is closed, so that the surface of the washer is flat (see Fig. 6).

### Example 1

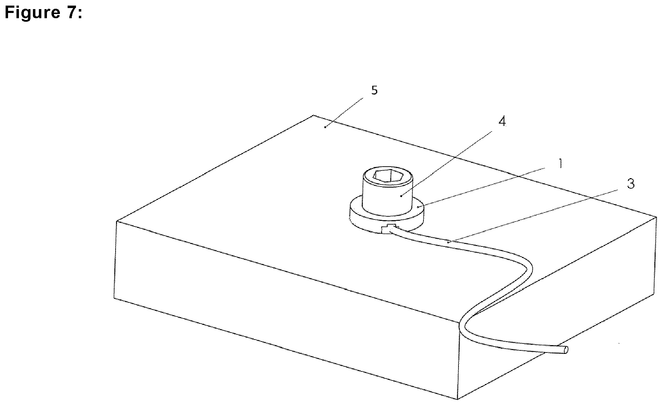

In a test set up as shown in Fig. 7, it was tested whether the torque set on a bolt has enough impact on the impedance signature obtained from the sensor element 2 contained in the washer 1. Therefore, the bolted joint 4 containing the washer 1 was tightened from completely loose (0 Nm) to its nominal tightening torque (25 Nm) through six steps and impedance signatures were acquired using a Keysight E4990A impedance analyzer in the range of 50 to 300 kHz.

Various features describing impedance signatures computed on predefined frequency subranges were shown to be highly correlated with torque set on the bolts and thus indicated that the electromechanical impedance signature is a reliable feature to assess the health status of the bolt (two examples, i.e. imaginary and real part of the root mean square deviation of the signature at different torque conditions to a reference signature at 25 Nm are shown in Fig. 3).

### Example 2

Also for Examples 2 and 3, a test setup as in Example 1 was used. A dataset of six tightening torque conditions from 0 Nm to 25 Nm through 5 Nm steps were created. Through eight days, for every class, signatures from one prototype were acquired, for a total of 262 signals. The first five acquisition days are from laboratory atmospheric conditions (21°C) and were defined as regular, while the last three acquisition days are from a thermal chamber (respectively at 30°C, 40°C and 50°C), and were defined as "thermal" and used in Example 3.

The collected data set was employed to test the performance of the autoencoder neural network. Both training and testing were performed under regular conditions. Signals from torque higher or equal to 20 Nm were labelled as healthy while others as anomalies. The whole real part of detrended signatures is provided to the autoencoder, after a normalization process to make them with unitary standard deviation and centered in zero. For training the autoencoder, an iterative process to find the optimal network architecture was performed.

The autoencoder neural network used within the examples reported is a neural network composed by 11 fully connected layers. The first layer has the input of the signal itself (1601), then the following layers have respectively 64, 32, 16, 8, and 4 units. The layer with 4 units is the bottleneck and it is defined as "code". Then, additional layers with, respectively, 8, 16, 32, 64 and 1601 units are used to reconstruct the signal. The activation function for every layer except the last one is the ReLU, while for the last layer a linear activation function was employed. The loss used for the backpropagation algorithm is the mean square error, while the optimizer employed is the "Adam" with a learning rate of 0.001. The network was trained in a maximum of 60 epochs, anyway the early stopping rule (to prevent overfitting) was employed with a patience of 20 epochs.

50% of signals are used to train the network, 30% of signals are used to validate the network and select the threshold. The threshold is selected on the 95th percentile of the validation reconstruction error. The remaining 20% of the signals are used to test the performance of the autoencoder.

### Example 3

The same experimental test setup as in Example 2 was used, except that data from thermal high-temperature conditions were added to the training process, as mentioned above.

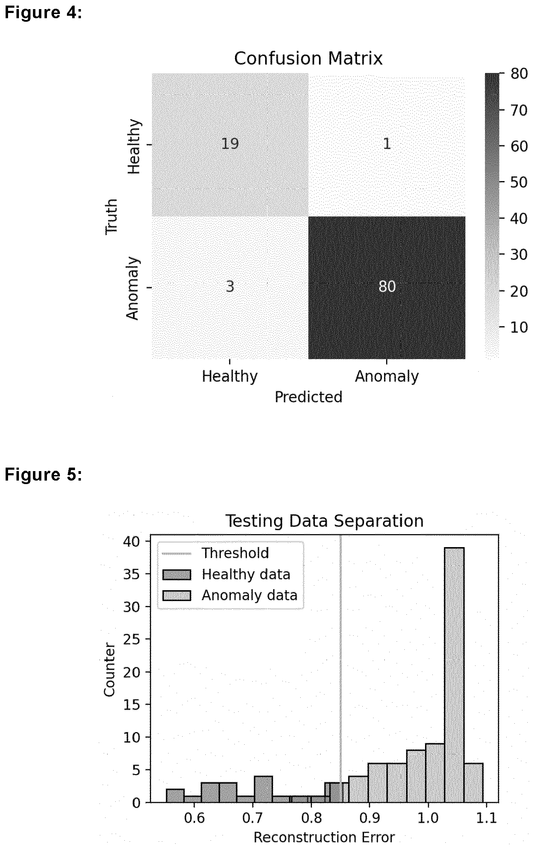

Response signals predicted to be derived from healthy or anomalous conditions based on the computed reconstruction error are set against the actually true condition in the confusion matrix shown in Fig. 4. The signal separation of the test data is shown in Fig. 5 which shows the reconstruction error for healthy and anomalous signals and the applied threshold to discern between healthy and anomalous signals of 0.85.

### Example 4

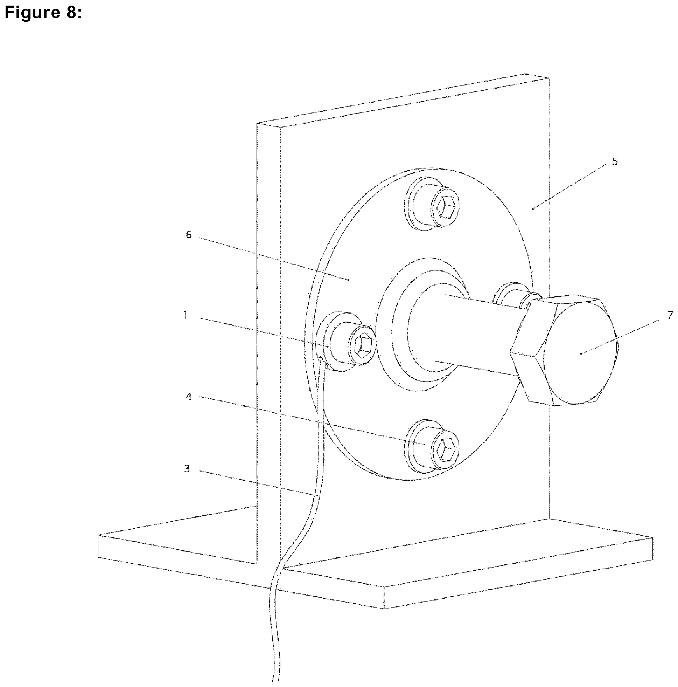

To test whether the algorithm can detect an anomaly from the surroundings of its installation site, a test structure simulating the stress state on a flanged pipeline joint is created. The test structure is shown in Fig. 8. The flange 6 has an outer diameter of 140 mm and is supposed to be fixed on plate 5. The central bolt 7 rotating, by gripping the flange 6 but facing the frame behind, creates an axial force on the flange 6, simulating the pressure of a fluid flowing inside. The left screw is the one "sensorized", i.e. bearing the washer 1 comprising the sensor element 2.

Initially, all bolted joints 4 (M8) are tightened at the nominal 25 Nm torque, and the central one is tightened up to 100 Nm, creating the condition defined as healthy. The first six days are used to train and validate the network (70% training, 30% validation), wherein the whole system is in a healthy condition. Next, days seven and eight are used to test whether the autoencoder can categorize correctly the healthy state and the anomalous one. The anomaly is simulated by completely loosening the adjacent bottom bolt 2.

**Table 1: Results of testing the monitoring method as to Examples 1 to 3.**

| | Training conditions | Loosened bolt | Accuracy | Type-II error |
|---|---|---|---|---|
| Example 2 | Regular | sensorized | 94.1% | 5.5% |
| Example 3 | Multi-temp. | sensorized | 96.1% | 3.6% |
| Example 4 | Regular | adjacent | 85.3% | 11.1% |

The results summarized in Table 1 show that the health status of the sensorized bolt can be predicted with high accuracy and low type-II error, i.e. percentage of missed alarms, after regular training by the inventive method, i.e. by training at one temperature (room temperature), and the system performs even better after multi-temperature training of the autoencoder neural network.

As shown by Example 4, the method is even suitable to detect loosening of bolted joints adjacent to "sensorized" joints.

## Claims

1. A method for monitoring an installation comprising joints wherein one or more of the joints comprise a washer and/or a nut and/or a bolt containing a sensor element, the method comprising the steps of:
(I) sending an electrical signal defined on a selected frequency range to the sensor element,
(II) receiving the electrical response signal from the sensor element and processing the signal to obtain the impedance signature of the coupled system,
(III) feeding the impedance signature signal and/or some or all of its features to an unsupervised machine learning algorithm and processing of the fed data by the unsupervised machine learning algorithm,
(IV) detecting and reporting anomalous conditions of the monitored installation.

2. Method according to claim 1, wherein one or more of the joints of the installation comprise a washer containing a sensor element.

3. The method according to claim 1 or 2, wherein one or more of the joints of the installation are bolted joints.

4. The method according to any one of the preceding claims, wherein the electrical signal is an oscillating electrical signal.

5. The method according to any one of the preceding claims wherein the electrical signal covers whole or part of a frequency range of 10 kHz to 10 MHz, preferably of 20 kHz to 1 MHz, more preferably of 30 kHz to 500 kHz, and most preferably from 50 kHz to 300 kHz.

6. The method according to any one of the preceding claims wherein the unsupervised machine learning algorithm is an autoencoder neural network.

7. The method according to any one of the preceding claims wherein the unsupervised machine learning algorithm has been trained by decoding and encoded impedance signature signal and/or some or all of its features obtained by processing the electrical response signal from the sensor element in the washer and/or the nut and/or the bolt of the installation to be monitored in conditions of the installation defined as healthy.

8. The method according to claim 6, wherein the training process of the unsupervised machine learning algorithm comprises training at multiple different conditions of the installation defined as healthy.

9. The method according to claim 7 or 8 wherein the training process of the unsupervised machine learning algorithm comprises training at multiple conditions of the installation defined as healthy under multiple different environmental, preferably different temperature and humidity, conditions.

10. The method according to any one of the preceding claims wherein processing of the fed data by the unsupervised machine learning algorithm comprises encoding and subsequent decoding of the data.

11. The method according to any one of the preceding claims wherein detecting anomalous conditions of the monitored installation comprises comparing the reconstruction error of a decoded data obtained from the unsupervised machine learning algorithm with a predetermined or adaptive threshold value.

12. The method according to claim 11 wherein the predetermined threshold is computed by the use of validation data.

13. The method according to any one of the preceding claims, wherein the sensor element comprises a piezoelectric, and/or magnetostrictive material and/or a electro-magnetic device, preferably comprises a piezoceramic material.

14. The method of any once of the preceding claims, wherein the sensor element is housed in a slot of the washer and/or the nut and/or the bolt.

15. The method according to any one of the preceding claims, wherein the sensor has the form of a disc.

16. A system for monitoring an installation comprising joints, wherein one or more of the joints comprise a washer and/or a nut and/or a bolt containing a sensor element, implementing the method according to any one of the preceding claims.
